# EUROPÄISCHE PATENTSCHRIFT

(11) **EP 3 253 206 B1**
(45) Veröffentlichungstag und Bekanntmachung des Hinweises auf die Patenterteilung: **13.11.2019**
(21) Anmeldenummer: 16700143.7
(22) Anmeldetag: 08.01.2016
(51) Int. Cl.: A01N 37/18, A01N 37/46, A01N 47/16, A01N 65/26, A01N 65/44, A01N 25/08, A01N 25/12, A01P 17/00

(54) **PUDERFORMULIERUNG ENTHALTEND INSEKTENABWEHRMITTEL**
POWDER FORMULATION COMPRISING AN INSECT REPELLENT
FORMULATION SOUS FORME DE POUDRE COMPRENANT UN INSECTIFUGE

(30) Priorität: 02.02.2015 EP 15000302
(43) Veröffentlichungstag der Anmeldung: 13.12.2017
(73) Patentinhaber: Merck Patent GmbH, 64293 Darmstadt (DE)
(72) Erfinder: TERMER, Michael, 65719 Hofheim (DE); PFLUECKER, Frank, 64297 Darmstadt (DE); HEIDER, Lilia, 64579 Gernsheim (DE); AXT-HEIDEMANN, Alexandra, 64665 Alsbach-Haehnlein (DE); ZUR LAGE, Jutta, 64285 Darmstadt (DE)
(86) Internationale Anmeldenummer: PCT/EP2016/000026
(87) Internationale Veröffentlichungsnummer: WO 2016/124306

(56) Entgegenhaltungen:
- EP-A1- 1 475 351
- WO-A1-95/17091
- US-A- 1 375 220
- US-A- 1 533 164
- US-A- 1 755 178
- US-A- 2 408 389
- US-A- 3 800 034
- US-A- 4 756 905
- DATABASE WPI Week 198451 Thomson Scientific, London, GB; AN 1984-316290 XP002754204, -& JP S59 199602 A (KAO CORP) 12. November 1984 (1984-11-12)
- MITCHELL L SCHLOSSMAN ET AL: "The Evaluation of Chemical Binders and Their Effect on Pressed Powders", JOURNAL OF THE SOCIETY COSMETIC CHEMISTS, SOCIETY OF COSMETIC CHEMISTS, US , Bd. 24 23. Mai 1973 (1973-05-23), Seiten 357-362, XP002742809, ISSN: 0037-9832 Gefunden im Internet: URL:http://journal.scconline.org/pdf/cc197 3/cc024n06/p00357-p00362.pdf
- DATABASE WPI Week 200725 Thomson Scientific, London, GB; AN 2007-247798 XP002754217, -& JP 2007 063185 A (DAINIPPON JOCHUGIKU KK) 15. März 2007 (2007-03-15) in der Anmeldung erwähnt

## Beschreibung

Die vorliegende Erfindung betrifft eine Puderformulierung enthaltend mindestens ein Insektenabwehrmittel und Magnesiumhydroxidcarbonat, sowie ein Verfahren zur Herstellung der Formulierung und die Verwendung der Formulierung zur Abwehr von Insekten.

Insekten stellen für den Menschen und auch für Tiere in mancherlei Hinsicht eine Beeinträchtigung oder gar eine Bedrohung dar. Eine Vielzahl von Mücken, Bremsen, Flöhen, Läusen, Wanzen, sowie Zecken, Milben, Wespen, Bienen, Ameisen, Kakerlaken und Fliegen im weiteren Verlauf unter den Sammelbegriffen Insekten und Spinnen - oder vereinfachend sogar unter dem im biologischen Sinn nicht korrekt gebrauchten Oberbegriff Insekten - zusammengefasst. Mücken, Bremsen, Flöhe, Läuse, Wanzen, sowie Zecken und Milben ernähren sich vom Blut der Warmblüter, zu denen auch die Menschen und Säugetiere zählen. Sie bohren sich mit ihren Stech- und Saugwerkzeugen in die Haut ihrer Opfer bis sie auf Blutgefäße stoßen. Während der Nahrungsaufnahme sondern sie gefäßerweiternde und gerinnungshemmende Mittel ab, die beim Wirt zu Juckreiz, Quaddelbildung und allergischen Reaktionen führen können. Insbesondere in den Tropen und Subtropen besteht darüber hinaus die Gefahr einer Infektion mit Krankheitserregern. So wird beispielsweise die Malaria durch die Anopheles-Mücke oder das Gelbfieber durch die Gelbfiebermücke übertragen. Auch in gemäßigten Regionen besteht die Gefahr von Infektionen mit von Insekten übertragenen Krankheitserregern wie beispielsweise der durch Zeckenbiss übertragenen Zeckenenzephalitis.

Einen Schutz vor der Belästigung durch Insekten und Spinnen bieten sogenannte Insektenabwehrmittel oder Repellentien. Darunter versteht man eine Reihe von Wirksubstanzen, die durch ihren Geruch abweisend auf Insekten und Spinnen wirken. Dabei handelt es sich in der Regel um schwerflüchtige Verbindungen, die langsam auf der Haut verdampfen und somit eine Duftglocke über der Haut bilden, welche die Insekten vertreibt.

Die Anforderungen an ein Insektenabwehrmittel sind hoch und vielfältig. Vor allem muss eine wirksamer Schutz der Haut vor Insekten gewährleistet sein. Die nachhaltige Abwehrwirkung über mehrere Stunden, auch unter klimatisch ungünstigen Bedingungen, ist wichtig. Weiterhin sollte das Repellent ein möglichst breites Wirkungsspektrum besitzen. Weitere Anforderungen sind eine maximale Haut- und Schleimhautverträglichkeit ohne toxische, allergisierende oder sensibilisierende Eigenschaften, wobei jedoch keine Hautpenetration erfolgen sollte. Ferner soll die Substanz eine hohe chemische Stabilität, d.h. keine Hydrolysierbarkeit, keine Photooxidierbarkeit, keine Oxidierbarkeit, hohe Thermostabilität und hohe Schweißfestigkeit aufweisen.

Zu den gebräuchlichsten Insektenabwehrmittel zählt N, N-Diethyl-3-methylbenzamid (oder N,N'-Diethyl-m-toluamid) ("DEET"), das gegen Stechmücken, Stech- und Sandfliegen, Bremsen, Flöhe, Wanzen, Zecken und Milben aktiv ist. Ein ebenfalls bekanntes Insektenabwehrmittel ist 1-(1-Methylpropoxycarbonyl)-2-(2-hydroxyethyl)piperidin (Icaridin). Zu den natürlichen Insektenschutzmitteln zählen beispielsweise Citronella- oder Andirobaöl. Besonders wirksam ist 3-(N-n-Butyl-N-acetyl-amino)-propionsäureethylester (unter dem Handelsnamen IR3535® bei der Fa. Merck KGaA, Darmstadt, Deutschland erhältlich), das beispielsweise gegen Stechmücken, Tsetsefliegen, Läuse, Sandmücken, Kakerlaken, Ameisen, Zecken und Bremsen eingesetzt werden kann.
Diese Substanzen werden heute in einer Reihe von Marktprodukten verwendet werden. Dabei handelt es sich meist um Emulsionen, Aerosole, Gele oder Sprays.

Um eine gute Wirksamkeit erzielen zu können, beträgt die Konzentration der Insektenabwehrmittel in der Formulierung in der Regel zwischen 5 und 50 Gewichts-%. Da es sich bei den genannten Insektenabwehrmitteln um Flüssigkeiten (Öle) handelt, lassen sich hohe Konzentrationen von mehr als 10 % leicht in Emulsionen, Gels oder Sprays einarbeiten.

WO 98/19538 beschreibt beispielsweise stabile wässrige Formulierungen von 3-(N-Butylacetamino)-propionsäureethylester.

Die Verwendung von Insektenabwehrmitteln in hohen Konzentrationen in klassischen Puderformulierungen (enthaltend ausschließlich Talkum in Kombination mit Silica, PMMA, Stärke, Magnesiumstearat oder Glimmer) ist dagegen jedoch nicht möglich. Der Grund hierfür ist, dass die Partikel des Puders miteinander verkleben und somit die Verteilung auf der Haut stark erschweren. Auch ist nicht gewährleistet, dass eine solche Formulierung eine gute Wirksamkeit aufweist.

WO 95/28410 beschreibt allgemein Puderformulierungen enthaltend biologisch aktives Material (u.a. werden Insektenrepellentien genannt), sowie ein Alkylpolyglykosid und einen Trägerstoff wie Silica, Talkum, einen Zeoliten, Magnesiumaluminiumsilicat, Calciumsulfat, Magnesiumcarbonat, Magnesiumoxid oder Aluminiumoxid.

CN 86105233 A beschreibt ein Insekten-abwehrendes Pulver enthaltend Calamine, Calciumcarbonat, Magnesiumcarbonat, Zinkstearat, Talkum, Kampfer, Borneol, Pfefferminzöl, Thymol, Parfümstoffe und p-Menthan-3,8-diol.

US 7790202 B1 offenbart eine Hautformulierung in Puderform, die unter anderem zur Insektenabwehr eingesetzt werden kann, enthaltend Maisstärke, Zinkoxid, Pfefferminz-, Basilikum-, Rosmarin- und Eukalyptuspulver, sowie Kupferglimmer und Silica.

JP 2007-063185 A offenbart ein alkoholfreies Insektenabwehrpuder enthaltend ein Insektenabwehrmittel ausgewählt aus *N,N-*Diethyl-*m*-toluamid und (*N*-Butylacetamino)-propionsäureethylester, ein anorganisches Pulver ausgewählt aus Talkum, Kaolin und Bentonit, sowie eine Kieselsäureverbindung.

Aufgabe der vorliegenden Erfindung war daher die Bereitstellung einer Puderformulierung enthaltend mindestens ein Insektenabwehrmittel ausgewählt aus *N*,*N*-Diethyl-*m*-toluamid, 3-(N-Butylacetamino)-propionsäureethylester, 1-(1-Methylpropoxycarbonyl)-2-(2-hydroxyethyl)piperidin, Citronellaöl und Andirobaöl .

Überraschend wurde nun gefunden, dass diese Insektenrepellentien in Puderformulierungen formuliert werden können, wenn diese Magnesiumhydroxidcarbonat enthalten.

Ein erster Gegenstand der vorliegenden Erfindung ist daher eine Puderformulierung enthaltend (a) mindestens ein Insektenabwehrmittel ausgewählt aus *N*,*N*-Diethyl-*m*-toluamid, 3-(N-Butylacetamino)-propionsäureethylester, 1-(1-Methylpropoxycarbonyl)-2-(2-hydroxyethyl)piperidin, Citronellaöl und Andirobaöl und (b) Magnesiumhydroxidcarbonat.

1-(1-Methylpropoxycarbonyl)-2-(2-hydroxyethyl)piperidin ist als Insektenabwehrmittel bekannt und ist im Handel beispielsweise unter der Bezeichnung Bayrepel® von der Fa. Lanxess AG erhältlich (INCI: Icaridin oder Picaridin; IUPAC: 1-piperidinecarboxylic acid 2-(2-hydroxyethyl)-1-methylpropylester; CAS 119515-38-7).

3-(N-Butylacetamino)-propionsäureethylester (synonym zu 3-(Acetyl-butyl-amino)-propionsäureethylester) (CAS 52304-36-6) ist ein bekanntes Insektenabwehrmittel, das unter dem Handelsnamen IR3535® von der Firma Merck KgaA, Darmstadt, vertrieben wird.

Diese Substanz wird mit ihren hervorragenden Eigenschaften bezüglich Haut- und Schleimhautverträglichkeit ohne toxische, allergisierende oder sensibilisierende Eigenschaften unter anderem in kosmetischen Zubereitungen eingesetzt, um den Menschen oder Tiere direkt vor Angriffen von z.B. Stechmücken oder Fliegen zu schützen.

*N*,*N*-Diethyl-*m*-toluamid (synonym zu Diethyltoluamid, N,N-Diethyl-3-methylbenzamid) (CAS 134-62-3) ist auch unter der Abkürzung DEET bekannt und weist ein breites Wirkungsspektrum gegen verschiedene Insekten auf.

Bevorzugt werden die Insektenabwehrmittel in Kombination eingesetzt. Dabei kann es sich beispielsweise um eine Kombination von 3-(N-Butylacetamino)-propionsäureethylester mit *N*,*N*-Diethyl-*m*-toluamid handeln, um eine Kombination von 3-(N-Butylacetamino)-propionsäureethylester mit 1-(1-Methylpropoxycarbonyl)-2-(2-hydroxyethyl)piperidin oder um eine Kombination von 3-(N-Butylacetamino)-propionsäureethylester mit *N*,*N*-Diethyl-*m*-toluamid und 1-(1-Methylpropoxycarbonyl)-2-(2-hydroxyethyl)piperidin. Weitere Besipiele sind Kombinationen von 3-(N-Butylacetamino)-propionsäureethylester mit Citronellaöl und/oder mit Andirobaöl.

In einer besonders bevorzugten Ausführungsform handelt es sich bei dem mindestens einen Insektenabwehrmittel in der Puderformulierung um 3-(N-Butylacetamino)-propionsäureethylester.

Magnesiumhydroxidcarbonat wird auch als Magnesiumhydrogencarbonat, basisches Magnesiumcarbonat oder Magnesiumcarbonathydroxid bezeichnet. Es kann mit der allgemeinen Summenformel

m MgCO₃ · Mg(OH)₂ · n H₂O

mit m=3-5 und n=3-8
beschrieben werden. Typischerweise handelt es sich um

4 MgCO₃ · Mg(OH)₂ · 4-5 H₂O.

Basisches Magnesiumcarbonat bzw. Magnesiumhydroxidcarbonat, mit der chemischen Zusammensetzung : 4 MgCO₃ · Mg(OH)₂ · 5 H₂O kann aus Magnesiumcarbonat (MgCO₃) hergestellt werden. Magnesiumcarbonat ist ein weißes, in Wasser sehr schwer lösliches Pulver. Es entsteht aus wässriger Lösung nur, wenn diese viel überschüssige Kohlensäure enthält. Magnesiumcarbonat kann mit 5, 3 und 1 Mol Kristallwasser kristallisieren und wird beim Kochen mit Wasser allmählich zu dem basischen Magnesiumcarbonat zersetzt. Entsprechende Verfahren zur Herstellung sind seit langem bekannt. Üblicherweise wird Magnesiumhydroxidcarbonat durch Ausfällen aus einer Magnesiumsulfatlösung mit Soda erhalten.
Im Handel sind beispielsweise entsprechende Produkte von der Fa. Lehmann & Voss & Co. erhältlich: "PharMagnesia® MC Type E", von Kremer-Pigmente: "Magnesiumhydroxidcarbonat", von Magnesia GmbH: "Magnesia 11", "Magnesia 12", "Magnesia 10"oder von Merck KGaA: "Magnesiumhydroxidcarbonat leicht".

Erfindungsgemäß hat es sich als vorteilhaft erwiesen, wenn das in der Puderformulierung eingesetzte Magnesiumhydroxidcarbonat eine Schüttdichte von maximal ca. 200 g/l aufweist, bevorzugt maximal ca. 150 g/l. Besonders bevorzugt ist eine Schüttdichte von kleiner 130 g/l.

Unter der Schüttdichte (auch "Schüttgewicht" genannt) versteht man die Dichte (d.h. die Masse pro Volumen), eines körnigen Feststoffs in einem Fluid, in diesem Fall Luft. Erfindungsgemäß wird die Schüttdichte entsprechend ISO 3923/2 mithilfe eines Scott Volumeters bestimmt: Hierfür wird die Probe entsprechend der Vorschriften mithilfe des Trichters durch das Scott Volumeter über mehrere Ablenkplatten in einen cylindrischen Behälter einer Kapazität von 25 ± 0,05 cm³ und eines inneren Durchmessers von 30 ± 1 mm gefüllt und gewogen. Das Mittel aus 3 Proben wird ermittelt und in g/cm³, bzw. g/ml oder g/l angegeben. Erfindungsgemäß ist beispielsweise "PharMagnesia® MC Type E", vertrieben durch die Firma Lehmann & Voss & Co. (Artikelnummer 24202010-00), mit einer Schüttdichte von ca. 120 g/l, hervorragend zum Einsatz in der erfindungsgemäßen Puderformulierung geeignet. Weiter sind geeignet Magnesiumhydroxidcarbonat vertrieben durch Kremer-Pigmente (Artikelnummer 64135), mit einer Schüttdichte von ca. 100 g/l, Magnesia 11 vertrieben durch Magnesia GmbH (Artikelnummer 1110000), mit einer Schüttdichte von ca. 100-150 g/l, Magnesia 10 (Artikelnummer 1100000) mit einer Schüttdichte von 80-100 g/l, Magnesia 12 (Artikelnummer 1120000) mit einer Schüttdichte von 65 - 85 g/l oder Magnesiumhydroxidcarbonat vertrieben durch Merck KGaA (Artikelnummer 105828) mit einer Schüttdichte von ca. 110 g/l.

In der vorliegenden Erfindung enthält die Puderformulierung 5 bis 20 Gewichts-% des mindestens einen Insektenabwehrmittels, bezogen auf das Gesamtgewicht der Formulierung. Besonders bevorzugt enthält die Formulierung 10 bis 20 Gewichts-% des mindestens einen Insektenabwehrmittels, bezogen auf das Gesamtgewicht der Formulierung.

In einer weiteren bevorzugten Ausführungsform enthält die Puderformulierung wie zuvor definiert 5 bis 40 Gewichts-% Magnesiumhydroxidcarbonat, bezogen auf das Gesamtgewicht der Formulierung, besonders bevorzugt 5 bis 30 Gewichts-%.

Die erfindungsgemäßen Zubereitungen zeichnen sich dadurch aus, dass sie eine hohe Wirksamkeit gegen Insekten aufweisen und dennoch eine pulvrige Konsistenz haben. Überraschenderweise kann durch die Verwendung von Magnesiumhydroxidcarbonat die Adhäsion der Partikel vermieden werden, so dass die Einarbeitung von hohen Mengen Insektenabwehrmittel von bis zu 40 % ermöglicht wird, ohne dass die Formulierung ölig wird oder verklebt. Dadurch ergibt sich ein langanhaltender Schutz gegen Mücken, Bremsen, Flöhe, Läuse, Wanzen, sowie Zecken, Milben, Wespen, Bienen, Ameisen, Kakerlaken oder Fliegen. Die Formulierungen zeichnen sich weiter durch exzellente kosmetische Eigenschaften aus, sind rieselfähig und z.B. mit einem Pinsel oder mit der Hand auf die Haut oder das Haar auftragbar.

In der vorliegenden Erfindung beträgt das Gewichtsverhältnis von Magnesiumhydroxidcarbonat zu Insektenabwehrmittel in der Formulierung 2:1 bis 1:1. Bevorzugt beträgt das Verhältnis 1,5:1 bis 1:1.

Ist der Gehalt an Magnesiumhydroxidcarbonat zu hoch, besteht die Möglichkeit, dass das Insektenabwehrmittel zu stark an den Magnesiumhydroxidpartikeln adsorbiert und keine Freisetzung desselben mehr erfolgen kann. Dadurch sinkt die Wirksamkeit der Formulierung. Da es sich bei den genannten Insektenabwehrmitteln um Flüssigkeiten (Öle) handelt, kann hingegen bei einem zu hohen Gehalt an Insektenabwehrmittel die pudrige Konsistenz der Formulierung abnehmen. Bei den Zubereitungen handelt es sich in der Regel um topisch anwendbare Zubereitungen, beispielsweise um eine kosmetische, pharmazeutische oder dermatologische Formulierung oder ein Medizinprodukt, um eine biozide Formulierung, ein Pestizid, ein Bio-Pestizid oder ein Insektizid. Dabei kann es sich auch um eine quasi drug Formulierung oder ein frei verkäufliches Arzneimittel (OTC-Präparat ("*over the counter*")) handeln. Die Zubereitungen enthalten in diesem Fall einen topisch kosmetisch oder dermatologisch geeigneten Träger und je nach gewünschtem Eigenschaftsprofil optional weitere geeignete Inhaltsstoffe.

Neben der topischen Anwendung sind auch weitere Anwendungen möglich. Beispielsweise kann es sich bei der Zubereitung um eine im Haushalt einzusetzende Formulierung handeln.

Im Sinne der vorliegenden Erfindung wird neben dem Begriff Zubereitung gleichbedeutend auch der Begriff Mittel oder Formulierung verwendet.

Die Zubereitungen können die genannten notwendigen oder optionalen Bestandteile umfassen oder enthalten, daraus im wesentlichen oder daraus bestehen. Alle Verbindungen oder Komponenten, die in den Zubereitungen verwendet werden können, sind entweder bekannt und käuflich erwerbbar oder können nach bekannten Verfahren synthetisiert werden.

Topisch anwendbar bedeutet im Sinne der Erfindung, dass die Zubereitung äußerlich und örtlich angewendet wird, d.h. dass die Zubereitung geeignet sein muss, um beispielsweise auf die Haut oder das Haar aufgetragen werden zu können. Die erfindungsgemäße Zubereitung kann beispielsweise auf das Gesicht, den Körper, die Füße oder das Haar aufgetragen werden.

Die erfindungsgemäßen Puderformulierungen eignen sich zur nichttherapeutischen Anwendung bei Mensch oder Tier. Bevorzugt ist die Anwendung beim Menschen.

Bei der erfindungsgemäßen Puderformulierung kann es sich beispielsweise um ein Gesichtspuder, ein Körperpuder, ein Babypuder oder ein Fußpuder handeln. Je nach Anwendungszweck können die Puderformulierungen daher verschiedene Eigenschaften aufweisen, wie Deck- und Haftvermögen, Saugvermögen, Adsorptionsvermögen oder antimikrobielle Wirkung.

Diese Eigenschaften lassen sich durch Verwendung bestimmter Puderbestandteile erreichen. So werden beispielsweise Siliciumdioxid, Magnesiumcarbonat, Kaolin, Kreide oder Stärke eingesetzt, um Puder herzustellen, die entweder Wasser und hydrophile Stoffe oder aber Öle, Fette oder lipophile Stoffe aufsaugen können. Titandioxid, Zinkoxid und Kreide werden verwendet, um die Deckkraft und das Haftvermögen eines Puders zu erhöhen. Das Haftvermögen lässt sich ferner durch Stärke, Aluminiumoxid, Zinkundecanat oder auch Metallseifen verbessern. Des weiteren soll durch den Einsatz von Zink-, Magnesium- und/oder Aluminiumsalzen der Laurin-, Myristin- und/oder Stearinsäure sowie durch Zink- und/oder Magnesiumdecanat oder Talk die Gleitfähigkeit des Puders gesteigert werden.

Für die Akzeptanz eines Puders sind neben den abdeckenden und aufsaugenden Eigenschaften ferner die taktilen Eigenschaften von großer Bedeutung. Dementsprechend spielt auch die Korngröße der verwendeten Feststoffe eine entscheidende Rolle, da zu grobe Pigmente ein "Bremsgefühl" bewirken und die Haut stumpf machen.

Dekorative Puderformulierungen enthalten darüber hinaus verschiedenste Farbpigmente. Die Auswahl der Farbstoffe erfolgt in erster Linie mit dem Ziel, einen modisch aktuellen Farbton zu erzielen.

Die Puderformulierung kann daher neben den erfindungsgemäßen Bestandteilen dem Fachmann bekannte weitere Bestandteile aufweisen.

In einer vorteilhaften Ausführungsform weist das Puderprodukt mindestens eine der folgenden pulverförmigen Komponenten auf: Füllstoffe, Pigmente, Perlmutt oder Mischungen derselben.

Je nach Bedarf können der Zubereitung Füllstoffe zugesetzt werden. Füllstoffe haben einen positiven Einfluss auf die Textur und können die Produkteigenschaften hinsichtlich Feinheit, Gleichmäßigkeit, Haptik, Haltbarkeit und Sebumresistenz verändern. Außerdem können Füllstoffe visuelle Effekte im Endprodukt ermöglichen.

Als Füllstoffen können anorganische Substanzen, vorzugsweise Talk, Kaolin, Bornitrid, Silikate, insbesondere Zeolithe oder Schichtsilikate (Glimmer) eingesetzt werden. Bei den Schichtsilikaten ist die Verwendung von Muskovit, Phlogopit, Biotit, Serizit, Lepidolith, Paragonit, synthetischen Schichtsilikaten oder Mischungen derselben bevorzugt. Zudem können Zinkoxid, Titanoxid, Zirkoniumoxid, Ceroxid, Magnesiumcarbonat und Calciumcarbonat, Apatit-(CaOH), Glas oder Keramik-Mikrokapseln eingesetzt werden.

An synthetischen organischen Polymeren können vorzugsweise Polycarbonate, Polyether, Polyester, Polyethylene, Polypropylen, Polyvinylchlorid, Polystyrole, Polyamide, Polyurethane, Polyacrylate, Poly-β-Alanin-Pulver oder Lauryllysin verwendet werden. Weitere bevorzugte organische Füllstoffe können ausgewählt werden aus Polytetrafluorethylen, Polymethylmethacrylaten, Silikonharzen oder Silikonelastomeren, Cellulosen, Stärken oder Stärkederivaten.

Bei gefärbten Produkten können eine Vielzahl unterschiedlicher Farbstoffe, Farbpigmente, Perlglanzpigmente oder Effektpigmente eingesetzt werden. Der Fachmann ist in der Lage, für die jeweilige Anwendung die geeigneten Farbstoffe oder Pigmente auszuwählen. Diese können sowohl einzeln als auch in einem Gemisch vorliegen sowie gegenseitig miteinander beschichtet sein, um diverse Farbeffekte zu erzielen. Die Partikel können unterschiedlich geformt sein, wie beispielsweise kugelig, oval, plättchenförmig oder ungleichmäßig geformt, sowie in beliebigen Kombinationen der verschiedenen Formen.

Farbpigmente können aus weißen oder farbigen Pigmenten, anorganischen oder organischen Pigmenten, sowie beschichteten oder unbeschichteten Pigmenten ausgewählt werden. An anorganischen Pigmenten ist die Verwendung von Titandioxid, gegebenenfalls auch beschichtet, Zirkoniumoxid, Zinkoxid, Ceroxid, Eisenoxid (z. B. Fe₂O₃, Fe₃O₄, FeO(OH)), natürlichen Aluminiumsilicaten wie Ocker, Glimmer und Kaolin, manganhaltigen Tonen wie Umbra und roter Bolus, Manganviolett, Ultramarin, Chromoxidgrün, Chromoxidhydratgrün, Chromhydroxid und Berliner Blau bevorzugt. An organischen Pigmenten können Ruß, FD&C Red 40, FD&C Yellow 5, FD&C Blue 1, D&C Green 5, Carmin-Lacke (aus Cochenille), sowie Verlackungen organischer Farbstoffe mit Aluminium, Barium, Calcium, Strontium, Zirkonium oder Mischungen der genannten Stoffe eingesetzt werden.

Um besondere Farbeffekte zu erzielen, können außerdem verschiedene natürliche Perlglanzpigmente wie beispielweise "Fischsilber" (Guanin/Hypoxanthin-Mischkristalle aus Fischschuppen) oder "Perlmutt" (gemahlene Muschelschalen) eingesetzt werden. Perlglanzpigmente können weiterhin aus den weißen Perlglanzpigmenten ausgewählt werden, wie beispielsweise mit Titandioxid oder mit Bismutchloridoxid (BiOCI) beschichtete Glimmer.
Außerdem können farbige Perlglanzpigmente wie Titandioxid-Glimmerpigmente mit Eisenoxiden, Titandioxid-Glimmerpigmente insbesondere mit Berliner Blau oder Chromoxid und Titandioxid-Glimmerpigmente mit unterschiedlichen organischen Pigmenten, sowie monokristalline Perlglanzpigmente wie zum Beispiel Bismutchloridoxid eingesetzt werden. Des Weiteren können auch plättchenförmige Metallpulver aus Aluminium, Bronze, Messing, Kupfer, Silber oder Gold verwendet werden. Diese Aufzählungen sind nur beispielhaft und keinesfalls abschließend.

Als pulverförmige Komponenten können im Puderprodukt sowohl hydrophobe als auch hydrophile pulverförmige Komponenten oder Mischungen derselben eingesetzt werden. Bei der hydrophoben pulverförmigen Komponente kann es sich um mindestens eine der folgenden handeln:
Talk, hydrophobe Polymer-Pulver, vorzugsweise Polyamide, besonders bevorzugt Polyamid 6.6, Polyethylen-Pulver, Polyfluor-Pulver, vorzugsweise Tetrafluorethylen-Polymere, Silikon-Pulver oder Polystyrol-Pulver. Als hydrophobe pulverförmige Komponenten eignen sich zudem Lipo-Aminosäuren, wie beispielsweise Lauryllysin und Bornitride.

Hydrophobe pulverförmige Komponenten können ebenfalls aus hydrophoben oder hydrophilen pulverförmigen Komponenten ausgewählt werden, die hydrophob beschichtet oder behandelt wurden. Die hydrophob beschichteten pulverförmigen Komponenten können vorzugsweise mit einem Silikon beschichtet sein. Pulverförmige Komponenten können ebenfalls mit Lecithinen oder pflanzlichen Wachsen, wie Carnaubawachs beschichtet werden. Ebenfalls möglich ist die Verwendung von Aminosäuren, Fluor-Derivaten, Mineralölen, Polyethylen, Polyacrylaten und/ oder Mischungen derselben. Bei hydrophob beschichteten und/oder behandelten Bestandteilen ist die Verwendung der folgenden pulverförmigen Komponenten bevorzugt: hydrophob beschichtete und/oder behandelte Glimmer, Silikate, Kaolin, Metalloxide, vorzugsweise Titandioxid, Eisenoxide, Zinkoxide und/oder Mischungen derselben.

In einer weiteren vorteilhaften Ausgestaltung handelt es sich bei der hydrophilen pulverförmigen Komponente im kosmetischen Puderprodukt mindestens um eine der folgenden: hydrophile Glimmer, vorzugsweise Phlogopite, Bismutchloridoxid, Silikate, hydrophile Polymere, vorzugsweise Polyacrylate, Polyamide oder Polyurethane, Cellulose- oder Stärkederivate, Kaolin, Apatit-(CaOH), Zinkoxid, Titanoxid, Calciumcarbonat, Magnesiumcarbonat, und/oder Mischungen derselben.

Pulverförmige Komponenten können zudem mittels verschiedener Materialien hydrophiliert werden. Unter den hydrophil beschichteten und/oder behandelten pulverförmigen Komponenten ist die Verwendung der folgenden bevorzugt: hydrophil beschichtete und/oder behandelte Polyamid-Pulver, Talk, Polyethylen-Pulver, expandierte Vinylidenchlorid-Acetonitril-Methyl(meth)acrylat-Copolymere, Polyfluoro-Pulver, Silikon-Pulver, Polyacrylat-Pulver, Polystyrol-Pulver, Pigmente und Mischungen derselben, hydrophile organische oder anorganische Pigmente.

In einer bevorzugten Ausführungsform enthält die Puderformulierung weiterhin ein oder mehrere Inhaltsstoffe ausgewählt aus Getreidestärke, Reisstärke, Maisstärke, modifizierte Stärke (z.B. Aluminium Starch Octenylsuccinat), Glimmer, synthetischer Glimmer, Bornitrid, Titandioxid, Talkum, Aluminiumoxid, Wismuthoxichlorid, PMMA, Nylon, und Silica. Diese Inhaltsstoffe können die leichte und homogene Verteilbarkeit der erfindungsgemäßen Puderformulierung weiter optimieren.

Eine typische Puderformulierung enthält beispielsweise neben dem Insektenabwehrmittel und dem Magnesiumhydroxidcarbonat 30 bis 80 Gew.-% Talk, 1 bis 15-Gew.% Stärke oder Glimmer (Mica) und 1 bis 5 Gew.-% Magnesiumsulfat.

In einer weiteren vorteilhaften Ausführungsform kann die Puderformulierung zusätzlich mindestens eine Öl-Komponente aufweisen. Die Öl-Komponente wird hierbei als Binder eingesetzt. Das Bindersystem besteht aus meist flüssigen Bestandteilen, welche die pulverförmigen Komponenten benetzen und so dem Puderprodukt Kompaktheit und einen gewissen Zusammenhalt geben. Binder haben zudem einen großen Einfluss auf das Texturgefühl. Bei der Öl-Komponente handelt es sich vorzugsweise um eine der folgenden Substanzen oder die Öl-Komponente enthält eine oder mehrere der folgenden Substanzen:
Poly(organo)siloxane (Silikone), vorzugsweise Methylcyclopolysiloxan, Diethylpolysiloxan, Methylphenylpolysiloxan, mit Fettsäuren modifiziertes Polysiloxan, mit Aminogruppen modifiziertes Polysiloxan, besonders bevorzugt Methylpolysiloxan und/oder Dimethylpolysiloxan, Esteröle, vorzugsweise Isopropylmyristat, Isopropylpalmitat, Isopropylstearat, Isopropyloleat, n-Butylstearat, n-Hexyllaurat, n-Decyloleat, Isooctylstearat, Isononylstearat, Isononylisononanoat, 2-Ethylhexylpalmitat, 2-Ethylhexyllaurat, 2-Hexyldecylstearat, 2-Octyldodecylpalmitat, Oleyloleat, Oleylerucat, Erucyloleat, Erucylerucat sowie synthetische, halbsynthetische und natürliche Gemische solcher Ester wie Maisöl, Avocadoöl, Kamelienöl, Olivenöl, Weizenkeimöl, Aprikosenkernöl, Sojaöl, Erdnussöl, Kakaobutter und/ oder Rizinusöl,
Wachse, vorzugsweise tierische Wachse, pflanzliche Wachse mineralische Wachse und/oder synthetische Wachse.

Die erfindungsgemäße Puderformulierung kann in einer weiteren Ausführungsform außerdem einen oder mehrere der folgenden Hilfsstoffe enthalten: Spurenelemente, beruhigende Stoffe, oberflächenaktive Substanzen, feuchthaltende Substanzen, rückfettende Agenzien, Fette, Alkohole, Polyole und deren toxikologisch verträglichen Ether und Ester, verzweigte und/oder unverzweigte Kohlenwasserstoffe, Antioxidantien, Vitamine, Emulgatoren, Stabilisatoren, pH-Wert-Regulatoren, Bakterizide, antimikrobielle Stoffe, Maskierungsmittel, Parfums, Silikone, Ceramide, Pflanzenextrakte, Weichmacher, Kohäsionsmittel, Schaumstabilisatoren, Verdickungsmittel, UV-Filter, Konservierungsmittel, Anti-Ageing-, Anti-Falten-, Anti-Schuppen-, Anti-Akne-, Anti-Cellulite-Wirkstoffen, Deodorants, hautaufhellenden Wirkstoffen oder Selbstbräunungssubstanzen.

Die schützende Wirkung von Zubereitungen gegen oxidativen Stress bzw. gegen die Einwirkung von Radikalen kann verbessert werden, wenn die Zubereitungen ein oder mehrere Antioxidantien enthalten, wobei es dem Fachmann keinerlei Schwierigkeiten bereitet geeignet schnell oder zeitverzögert wirkende Antioxidantien auszuwählen. Als günstige, aber dennoch fakultativ zu verwendende Antioxidantien können alle für kosmetische und/oder dermatologische Anwendungen geeigneten oder gebräuchlichen Antioxidantien verwendet werden.

Besonders vorteilhaft werden die Antioxidantien gewählt aus der Gruppe bestehend aus Aminosäuren (z.B. Glycin, Histidin, Tyrosin, Tryptophan) und deren Derivate, Imidazole (z.B. Urocaninsäure) und deren Derivate, Peptide wie D,L-Carnosin, D-Carnosin, L-Carnosin und deren Derivate (z.B. Anserin), Carotinoide, Carotine (z.B. alpha -Carotin, beta -Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, gamma -Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Buthioninsulfone, Penta-, Hexa-, Heptathioninsulfoximin) in sehr geringen verträglichen Dosierungen (z.B. pmol bis µmol/kg), ferner (Metall)-Chelatoren (z.B. alpha-Hydroxyfettsäuren, Palmitinsäure, Phytinsäure, Lactoferrin), alpha -Hydroxysäuren (z.B. Citronensäure, Milchsäure, Äpfelsäure), Huminsäure, Gallensäure, Gallenextrakte, Bilirubin, Biliverdin, EDTA, EGTA, Pentasodium ethylenediamin tetramethylen phosphonat und deren Derivate, ungesättigte Fettsäuren und deren Derivate (z.B. gamma - Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, alpha -Glycosylrutin, Ferulasäure, Furfurylidenglucitol, Carnosin, Butylhydroxytoluol, Butylhydroxyanisol, Nordihydroguajakharzsäure, Nordihydroguajaretsäure, Trihydroxybutyrophenon, Quercitin, Harnsäure und deren Derivate, Mannose und deren Derivate, Zink und dessen Derivate (z.B. ZnO, ZnSO4) Selen und dessen Derivate (z.B. Selenmethionin), Stilbene und deren Derivate (z.B. Stilbenoxid, Trans-Stilbenoxid).

Geeignete Antioxidantien sind auch Verbindungen der Formeln A oder B 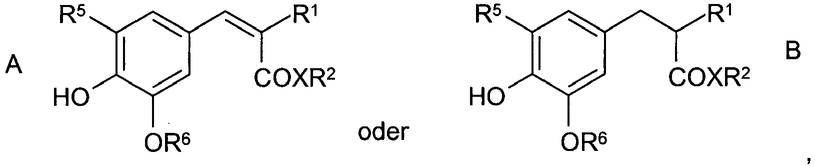 worin
- R¹: aus der Gruppe -C(O)CH₃, -CO₂R³, -C(O)NH₂ und -C(O)N(R⁴)₂ ausgewählt werden kann,
- X: O oder NH,
- R²: lineares oder verzweigtes Alkyl mit 1 bis 30 C-Atomen,
- R³: lineares oder verzweigtes Alkyl mit 1 bis 20 C-Atomen,
- R⁴: jeweils unabhängig voneinander H oder lineares oder verzweigtes Alkyl mit 1 bis 8 C-Atomen,
- R⁵: H, lineares oder verzweigtes Alkyl mit 1 bis 8 C-Atomen oder lineares oder verzweigtes Alkoxy mit 1 bis 8 C-Atomen und
- R⁶: lineares oder verzweigtes Alkyl mit 1 bis 8 C-Atomen bedeutet,
vorzugsweise Derivate der 2-(4-Hydroxy-3,5-dimethoxybenzyliden)-malonsäure und/oder 2-(4-Hydroxy-3,5-dimethoxybenzyl)-malonsäure, besonders bevorzugt 2-(4-Hydroxy-3,5-dimethoxybenzyliden)-malonsäure-bis-(2-ethylhexyl)ester (z.B. Oxynex® ST Liquid) und/oder 2-(4-Hydroxy-3,5-dimethoxybenzyl)-malonsäure-bis-(2-ethylhexyl)ester (z.B. RonaCare® AP).

Mischungen von Antioxidantien sind ebenfalls zur Verwendung in den erfindungsgemäßen kosmetischen Zubereitungen geeignet. Bekannte und käufliche Mischungen sind beispielsweise Mischungen enthaltend als aktive Inhaltsstoffe Lecithin, L-(+)-Ascorbylpalmitat und Zitronensäure, natürliche Tocopherole, L-(+)-Ascorbylpalmitat, L-(+)-Ascorbinsäure und Zitronensäure (z.B. Oxynex® K LIQUID), Tocopherolextrakte aus natürlichen Quellen, L-(+)-Ascorbylpalmitat, L-(+)-Ascorbinsäure und Zitronensäure (z.B. Oxynex® L LIQUID), DL-α-Tocopherol, L (+)-Ascorbylpalmitat, Zitronensäure und Lecithin (z.B. Oxynex® LM) oder Butylhydroxytoluol (BHT), L-(+)-Ascorbylpalmitat und Zitronensäure (z.B. Oxynex® 2004). Derartige Antioxidantien werden mit den erfindungsgemäßen Verbindungen in solchen Zusammensetzungen üblicherweise in Gewichtsprozentverhältnissen im Bereich von 1000:1 bis 1:1000, bevorzugt in Gewichtsprozentverhältnissen von 100:1 bis 1:100 eingesetzt.

Unter den Phenolen, die erfindungsgemäß verwendet werden können, sind die teilweise als Naturstoffe vorkommenden Polyphenole für Anwendungen im pharmazeutischen, kosmetischen oder Ernährungsbereich besonders interessant. Beispielsweise weisen die hauptsächlich als Pflanzenfarbstoffe bekannten Flavonoide oder Bioflavonoide häufig ein antioxidantes Potential auf. Mit Effekten des Substitutionsmusters von Mono- und Dihydroxyflavonen beschäftigen sich K. Lemanska, H. Szymusiak, B. Tyrakowska, R. Zielinski, I.M.C.M. Rietjens; Current Topics in Biophysics 2000, 24(2), 101-108. Es wird dort beobachtet, dass Dihydroxyflavone mit einer OH-Gruppe benachbart zur Ketofunktion oder OH Gruppen in 3'4'-oder 6,7- oder 7,8-Position antioxidative Eigenschaften aufweisen, während andere Mono- und Dihydroxyflavone teilweise keine antioxidativen Eigenschaften aufweisen.

Häufig wird Quercetin (Cyanidanol, Cyanidenolon 1522, Meletin, Sophoretin, Ericin, 3,3',4',5,7-Pentahydroxyflavon) als besonders wirksames Antioxidans genannt (z.B. C.A. Rice-Evans, N.J. Miller, G. Paganga, Trends in Plant Science 1997, 2(4), 152-159). K. Lemanska, H. Szymusiak, B. Tyrakowska, R. Zielinski, A.E.M.F. Soffers und I.M.C.M. Rietjens (Free Radical Biology&Medicine 2001, 31(7), 869-881 untersuchen die pH-Abhängigkeit der antioxidanten Wirkung von Hydoxyflavonen. Über den gesamten pH-Bereich zeigt Quercetin die höchste Aktivität der untersuchten Strukturen.

Die Menge der vorgenannten Antioxidantien (eine oder mehrere Verbindungen) in den erfindungsgemäßen Zubereitungen beträgt vorzugsweise 0,001 bis 30 Gew.-%, besonders bevorzugt 0,05 bis 20 Gew.-%, insbesondere 0,1 bis 10 Gew.-%, bezogen auf das Gesamtgewicht der Zubereitung.

Die Zubereitungen können als weitere Inhaltsstoffe Vitamine enthalten. Bevorzugt sind Vitamine und Vitamin-Derivate ausgewählt aus Vitamin A, Vitamin-A-Propionat, Vitamin-A-Palmitat, Vitamin-A-Acetat, Retinol, Vitamin B, Thiaminchloridhydrochlorid (Vitamin B₁), Riboflavin (Vitamin B₂), Nicotinsäureamid, Vitamin C (Ascorbinsäure), Vitamin D, Ergocalciferol (Vitamin D₂), Vitamin E, DL-α-Tocopherol, Tocopherol-E-Acetat, Tocopherolhydrogensuccinat, Vitamin K₁, Esculin (Vitamin P-Wirkstoff), Thiamin (Vitamin B₁), Nicotinsäure (Niacin), Pyridoxin, Pyridoxal, Pyridoxamin, (Vitamin B₆), Panthothensäure, Biotin, Folsäure und Cobalamin (Vitamin B₁₂), insbesondere bevorzugt Vitamin-A-Palmitat, Vitamin C und dessen Derivate, DL-α-Tocopherol, Tocopherol-E-Acetat, Nicotinsäure, Pantothensäure und Biotin. Vitamine werden mit den üblicherweise bei kosmetischer Anwendung in Bereichen von 0,01 bis 5,0 Gew.-%, bezogen auf das Gesamtgewicht, zugesetzt.

Die oben genannten Formulierungen können vorteilhaft mit allen bekannten Konservierungsstoffen oder antimikrobiellen Wirkstoffen kombiniert werden, wie zum Beispiel Anissäure, Alkohol, Ammomiumbenzoat, Ammoniumpropionat, Benzoesäure, Bronopol, Butylparaben, Benzethoniumchlorid, Benzalkoniumchlorid, 5-Brom-5-nitro-1,3-dioxan, Benzylalkohol, Borsäure, Benzisothiazolinon, Benzotriazol, Benzylhemiformat, Benzylparaben, 2-Brom-2-Nitropropan-1,3-Diol, Butylbenzoat, Chlorphenesin, Capryl/Capringlyceride, Caprylylglycol, Camellia Sinensis Blattextrakt, Candida Bombicola/glucose/methyl rapeseedate, Chlorxylenol, Chloracetamid, Chlorhexidin, Chlorbutanol, Calciumbenzoat, Calciumparaben, Calciumpropionat, Calciumsalicylat, Calciumsorbat, Captan, Chloramin T, Chlorhexidindiacetat, Chlorhexidindigluconat, Chlorhexidindithydrochlorid, Chloracetamin, p-Chlor-m-Cresol, Chlorophen, p-Chlorphenol, Chlorthymol, Citrus Grandis (Grapefruit) Fruchtextract, Citrus Grandis (Grapefruit) Samenextract, m-Cresol, o-Cresol, p-Cresol, gemischte Cresole, 1,2-Decanediol (INCI Decylene Glycol), Diazolidinylharnstoff, Dichlorobenzylalcohol, Dimethyloxazolidin, DMDM Hydantoin, Dimethylhydroxmethylpyrazol, Dehydroessigsäure, Diazolidinylharnstoff, DEDM Hydantoin, DEDM Hydantoin Dilaurat, Dibrompropamidindiisothionat, Dimethylolethylenthioharnstoff, Dithiomethylbenzamid, DMHF, Domiphenbromid, 7-Ethylbicyclooxazolidin, Ethylparaben, Ethylhexylglycerin, Ethanol, Ethylferulat, Formaldehyd, Ferulasäure, Glycerylcaprate, Glutaral, Glycerolformat, Glyoxal, Hexamidindiisethionat, Hexandiol, Hexetidin, Hexamidin, Hexamidindiparaben, Hexamidinparaben, 4-Hydroxybenzoesäure, Hydroxymethyldioxazabicyclooctan, Imidazolidinylharnstoff, Imidiazolidinylharnstoff NF, Isobutylparaben, Isothiazolinon, Iodpropynylbutylcarbamat, Isodecylparaben, Isopropylcresol, Isopropylparaben, Isopropylsorbat, Kaliumsorbat NF FCC, Kupferusnat, Kaliumbenzoat, Kaliumethylparaben, Kaliummethylparaben, Kaliumparaben, Kaliumphenoxid, Kalium o-Phenylphenat, Kaliumpropionat, Kaliumpropylparaben, Kaliumsalicylat, Kaliumsorbat, Methylparaben, Methylisothiazolinon, Methylbenzethoniumchloridphenol, Methyldibromglutaronitril, Methenammoniumchlorid, Methylbromglutaronitril, Magnesiumbenzoat, Magnesiumpropionat, Magnesiumsalicylat, MDM Hydantoin, MEA-Benzoat, MEA o-Phenylphenat, MEA-Salicylat, Methylchloristhiazolinon, Natriumbenzoat NF FCC, Natriumcaprylat, Natriumdehydroacetat, Natriumdehydroacetate FCC, Natriumhydroxymethylglycinat, Natriummethylparaben, Natriumpropylparaben, Natriumiodat, Niembaumsamenöl, Nisin, Natriumbenzoat, Natriumbutylparaben, Natrium-p-chlor-m-Cresol, Natriumethylparaben, Natriumformat, Natriumhydroxymethansulfonat, Natriumisobutylparaben, Natriumparaben, Natriumphenolsulfonat, Natriumphenoxid, Natrium-o-phenylphenat, Natriumpropionat, Natriumpropylparaben, Natriumpyrithion, Natriumsalicylat, Natriumsorbat, Ortholphenylphenol, Phenoxyethanol, Propylparaben, Polymethoxybicyclicoxazolidin, Pinus Pinaster Rindenextrakt, Poloxamer 188, PVP-Iodine, Parabene, Pircotone olamine, Phenethylalkohol, Polyaminopropylbiguanid, Polyquarternium-42, PEG-5 DEDM Hydantoin, PEG-15 DEDM Hydantoin, PEG-5 Hydantoin Oleat, PEG-15 DEDM Hydantoin Stearat, Phenethylalcohol, Phenol, Phenoxyethylparaben, Phenoxyisopropanol, Phenylbenzoat, Phenyl Quecksilberacetat, Phenyl Quecksilberbenzoat, Phenyl Quecksilberborat, Phenyl Quecksilberbromid, Phenylquecksilberchlorid, Phenylparaben, o-Phenylphenol, Polyaminopropylbiguanidstearat, Propionsäure, Propylbenzoat, Quaternium-15, Quaternium-8, Quaternium-14, Rosmarinus officinalis Blattextrakt, Sorbinsäure NF FCC, Selenium disulphin, Sorbinsäure, Salicylsäure, Silberborsilicat, Silbermagnesiumaluminiumphosphat, Triclosan, di-alpha-Tocopherol, Tocopherolacetat, Thimersal, Triclocarban, TEA-Sorbat, Thimerosal, Usnic acid, Undecylenoyl PEG-5 Paraben, Vitis vinifera Samenextrakt, Teebaumöl, Wasserstoffperoxid, Zinkpyrithion, Zinkoxid, Zinkphenolsulphonat oder Kombinationen davon.

Die Zubereitungen können auch ein oder mehrere Anti-Ageing-Wirkstoffe enthalten. Geeignete Anti-Ageing Wirkstoffe, insbesondere für hautpflegende Zubereitungen, sind vorzugsweise sogenannte kompatible Solute. Es handelt sich dabei um Substanzen, die an der Osmoregulation von Pflanzen oder Mikroorganismen beteiligt sind und aus diesen Organismen isoliert werden können. Unter den Oberbegriff kompatible Solute werden dabei auch die in der Deutschen Patentanmeldung DE-A-10133202 beschriebenen Osmolyte gefasst. Geeignete Osmolyte sind beispielsweise die Polyole, Methylamin- Verbindungen und Aminosäuren sowie jeweils deren Vorstufen. Als Osmolyte werden im Sinne der Deutschen Patentanmeldung DE-A-10133202 insbesondere Substanzen aus der Gruppe der Polyole, wie beispielsweise myo-Inositol, Mannitol oder Sorbitol und/oder einer oder mehrere der nachfolgend genannten osmolytisch wirksamen Stoffe verstanden: Taurin, Cholin, Betain, Phosphorylcholin, Glycerophosphorylcholine, Glutamin, Glycin, α-Alanin, Glutamat, Aspartat, Prolin, und Taurin. Vorstufen dieser Stoffe sind beispielsweise Glucose, Glucose-Polymere, Phosphatidylcholin, Phosphatidylinositol, anorganische Phosphate, Proteine, Peptide und Polyaminsäuren. Vorstufen sind z. B. Verbindungen, die durch metabolische Schritte in Osmolyte umgewandelt werden.

Vorzugsweise werden erfindungsgemäß als kompatible Solute Substanzen gewählt aus der Gruppe bestehend aus Pyrimidincarbonsäuren (wie Ectoin und Hydroxyectoin), Prolin, Betain, Glutamin, cyclisches Diphosphoglycerat, N.-Acetylornithin, Trimethylamine-N-oxid Di-myo-inositol-phosphat (DIP), cyclisches 2,3-diphosphoglycerat (cDPG), 1,1-Diglycerin-Phosphat (DGP), β-Mannosylglycerat (Firoin), β-Mannosylglyceramid (Firoin-A) oder/und Di-mannosyl-di-inositolphosphat (DMIP) oder ein optisches Isomer, Derivat, z.B. eine Säure, ein Salz oder Ester dieser Verbindungen oder Kombinationen davon eingesetzt.

Dabei sind unter den Pyrimidincarbonsäuren insbesondere Ectoin ((S)-1,4,5,6-Tetrahydro-2-methyl-4-pyrimidincarbonsäure) und Hydroxyectoin ((S,S)-1,4,5,6-Tetrahydro-5-hydroxy-2-methyl-4-pyrimidincarbonsäure) und deren Derivate zu nennen.

Additional können als Anti-Ageing Wirkstoffe Produkte der Firma Merck wie z.B. 5,7-Dihydroxy-2-methyl-chromon, vermarktet unter dem Handelsnamen RonaCare®Luremine, Ronacare®Isoquercetin, Ronacare®Tilirosid oderRonacare®Cyclopeptide 5 verwendet werden.

Die Zubereitungen können auch ein oder mehrere hautaufhellende Wirkstoffe oder synonym Depigmentierungswirkstoffe oder Melanogeneseinhibitoren enthalten. Hautaufhellende Wirkstoffe können prinzipiell alle dem Fachmann bekannte Wirkstoffe sein. Beispiele von Verbindungen mit hautaufhellender Aktivität sind Hydrochinon, Kojisäure, Arbutin, Aloesin, Niacinamide, Azelainsäure, Elaginsäure, Maulbeerbaumextract, Magnesium-ascorbyl-phosphat, Süßholzwurzelextrakt, Emblica, Ascorbinsäure oder Rucinol.

Ferner können die erfindungsgemäßen Zubereitungen mindestens eine Selbstbräunungssubstanz als weiteren Inhaltsstoff enthalten.
Als vorteilhafte Selbstbräunungssubstanzen können unter anderem eingesetzt werden:
1,3-Dihydroxyaceton, Glycerolaldehyd, Hydroxymethylglyoxal, γ-Dialdehyd, Erythrulose, 6-Aldo-D-Fructose, Ninhydrin, 5-Hydroxy-1,4-naphtochinon (Juglon) oder 2-Hydroxy-1,4-naphtochinon (Lawson). Ganz besonders bevorzugt ist 1,3-Dihydroxyaceton, Erythrulose oder deren Kombination. Bevorzugt ist die mindestens eine weitere Selbstbräunungssubstanz in der Zubereitung in einer Menge von 0,01 bis 20 Gew.-%, besonders bevorzugt in einer Menge von 0,5 bis 15 Gew.-% und ganz besonders bevorzugt in einer Menge von 1 bis 8 Gew.-%, bezogen auf die Gesamtmenge der Zubereitung, enthalten.

Rückfettende Substanzen können beispielsweise ausgewählt sein aus Purcellinöl, Eucerit TM und Neoceht TM.

Günstig sind auch solche Zubereitungen, die einen UV-Filter enthalten. Dabei kann es sich um eine UV-A-Filtersubstanz und/oder eine UV-B-Filtersubstanz. Solche Formulierungen können gegebenenfalls auch ein oder mehrere anorganische Pigmente als UV-Filtersubstanzen enthalten.

Die erfindungsgemäßen Zubereitungen können zusätzlich mindestens einen UV-Filter enthalten.

Organische UV-Filter, sogenannte hydrophile oder lipophile Sonnenschutzfilter, sind im UVA-Bereich und/oder UVB-Bereich und/oder IR und/oder VIS-Bereich (Absorber) wirksam. Diese Substanzen können insbesondere unter Zimtsäurederivaten, Salicylsäurederivaten, Campherderivaten, Triazinderivaten, β,β-Diphenylacrylatderivaten, p-Aminobenzoesäurederivaten sowie polymeren Filtern und Siliconfiltern, die in der Anmeldung WO-93/04665 beschrieben sind, ausgewählt sein. Weitere Beispiele für organische Filter sind in der Patentanmeldung EP-A 0 487 404 angegeben. Im Folgenden werden die genannten UV-Filter meist nach der INCI-Nomenklatur benannt.

Insbesondere für eine Kombination geeignet sind:
para-Aminobenzoesäure und deren Derivate: PABA, Ethyl PABA, Ethyl dihydroxypropyl PABA, Ethylhexyl dimethyl PABA, z. B. vetrieben unter dem Namen "Escalol 507" von der Fa. ISP, Glyceryl PABA, PEG-25 PABA, z. B. vetrieben unter dem Namen "Uvinul P25" von der Fa. BASF.

Salicylate: Homosalate vetrieben unter dem Namen "Eusolex HMS" von der Fa. Merck; Ethylhexyl salicylate, z. B. vetrieben unter dem Namen "Neo Heliopan OS" von der Fa. Symrise, Dipropylene glycol salicylate, z. B. vetrieben unter dem Namen "Dipsal" von der Fa. Scher, TEA salicylate, z. B. vetrieben unter dem Namen "Neo Heliopan TS" von der Fa. Symrise.

β,β-Diphenylacrylate Derivate: Octocrylene, z. B. vetrieben unter dem Namen "Eusolex® OCR" von der Firma Merck", "Uvinul N539" von der Fa. BASF, Etocrylene, z. B. vetrieben unter dem Namen "Uvinul N35" von der BASF.

Benzophenone Derivate: Benzophenone-1, z. B. vetrieben unter dem Namen "Uvinul 400"; Benzophenone-2, z. B. vetrieben unter dem Namen "Uvinul D50" ; Benzophenone-3 oder Oxybenzone, z. B. vetrieben unter dem Namen "Uvinul M40";Benzophenone-4, z. B. vetrieben unter dem Namen "Uvinul MS40" ; Benzophenone-9, z. B. vetrieben unter dem Namen "Uvinul DS-49" von der Fa. BASF, Benzophenone-5, Benzophenone-6, z. B. vetrieben unter dem Namen "Helisorb 11" von der Fa. Norquay, Benzophenone-8, z. B. vetrieben unter dem Namen "Spectra-Sorb UV-24" von der Fa. American Cyanamid, Benzophenone-12 n-hexyl 2-(4-diethylamino-2-hydroxybenzoyl) benzoate oder 2-Hydroxy-4-methoxybenzophenon, vertrieben von der Fa. Merck, Darmstadt unter dem Namen Eusolex® 4360.

Benzylidencampher Derivate: 3-Benzylidenecamphor, z. B. vetrieben unter dem Namen "Mexoryl SD" von der Fa. Chimex, 4-Methylbenzylidenecamphor, z. B. vetrieben unter dem Namen "Eusolex 6300" von der Fa. Merck, Benzylidenecamphorsulfonsäure, z. B. vetrieben unter dem Namen "Mexoryl SL" von der Fa. Chimex, Camphor benzalkonium methosulfate, z. B. vetrieben unter dem Namen "Mexoryl SO" von der Fa. Chimex, Terephthalylidenedicamphorsulfonsäure, z. B. vetrieben unter dem Namen "Mexoryl SX" von der Fa Chimex, Polyacrylamidomethylbenzylidenecamphor vetrieben unter dem Namen "Mexoryl SW" von der Fa. Chimex.

Phenylbenzimidazol Derivate: Phenylbenzimidazolesulfonsäure, z. B. vetrieben unter dem Namen "Eusolex 232" von der Fa. Merck, Dinatrium phenyl dibenzimidazole tetrasulfonat, z. B. vetrieben unter dem Namen "Neo Heliopan AP" von der Fa. Symrise.

Phenylbenzotriazol Derivate: Drometrizole trisiloxane, z. B. vetrieben unter dem Namen "Silatrizole" von der Fa. Rhodia Chimie, Methylenebis(benzotriazolyl)tetramethylbutylphenol in fester Form, z. B. vetrieben unter dem Namen "MIXXIM BB/100" von der Fa. Fairmount Chemical, oder in mikronisierter Form als wässrige Dispersion, z. B. vetrieben unter dem Namen "Tinosorb M" von der Fa. BASF.

Triazin Derivate: Ethylhexyltriazone, z. B. vetrieben unter dem Namen "Uvinul T150" von der Fa. BASF, Diethylhexylbutamidotriazone, z. B. vetrieben unter dem Namen "Uvasorb HEB" von der Fa. Sigma 3V. Weitere Triazinderivate sind exemplarisch 2,4,6-tris(diisobutyl 4'-aminobenzalmalonate)-s-triazine, oder 2,4,6-Tris-(biphenyl)-1,3,5-triazine, Butyl 4-({4-{[4-(butoxycarbonyl)phenyl]amino}-6-[(3-{1,3,3,3-tetramethyl-1-[(trimethylsilyl)oxy]disiloxanyl} propyl)amino]-1,3,5-triazin-2-yl}amino)benzoate, vertrieben unter dem namen Mexoryl SBS. Struktur von Mexoryl SBS: 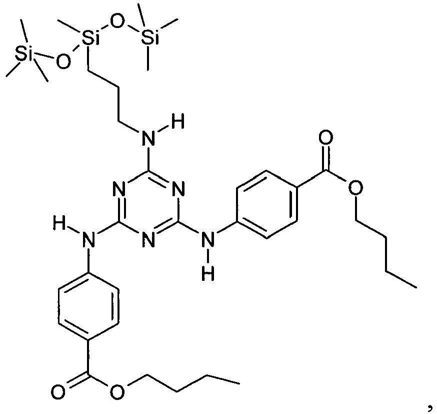 sowie Bis-ethylhexyloxyphenol methoxyphenyl triazine, z.B. vertrieben unter dem Namen Tinosorb S durch die Firma BASF.

Anthranilin Derivate: Menthyl anthranilate, z. B. vetrieben unter dem Namen "Neo Heliopan MA" von der Fa. Symrise.

Imidazol Derivate: Ethylhexyldimethoxybenzylidenedioxoimidazoline propionat.

Benzalmalonat Derivate: Polyorganosiloxane enthaltend funktionelle benzalmalonate Gruppen, wie z.B. Polysilicone-15, z. B. vetrieben unter dem Namen "Parsol SLX" von der Hoffmann LaRoche.

4,4-Diarylbutadien Derivate: 1,1-Dicarboxy(2,2'-dimethylpropyl)-4,4-diphenylbutadiene.

Benzoxazole Derivate: 2,4-bis[5-(1-dimethylpropyl)benzoxazol-2-yl(4-phenyl) imino]-6-(2-ethylhexyl)imino-1,3,5-triazine, z. B. vetrieben unter dem Namen Uvasorb K2A von der Fa. Sigma 3V und Mischungen dieses enthaltend.

Piperazinderivate wie beispielsweise die Verbindung 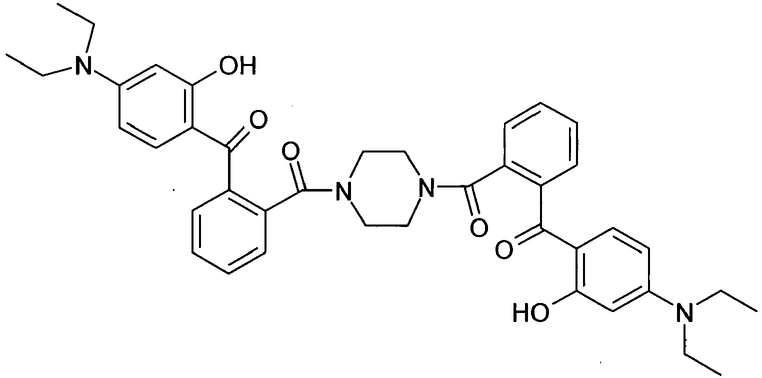 oder die UV-Filter der folgenden Strukturen 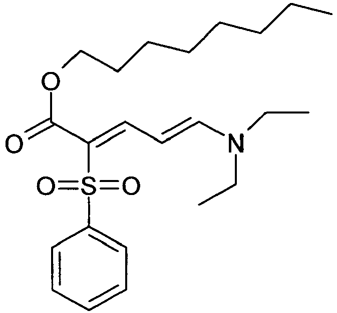 oder

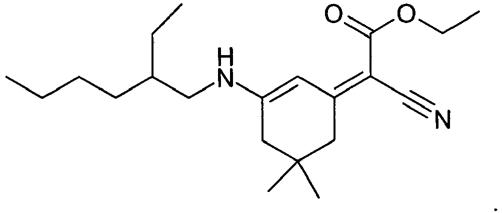

Es können auch UV-Filter auf Basis von Polysiloxancopolymeren mit einer statistischen Verteilung gemäß nachfolgender Formel verwendet werden, wobei z.B. a = 1,2; b= 58 und c=2,8 sind:

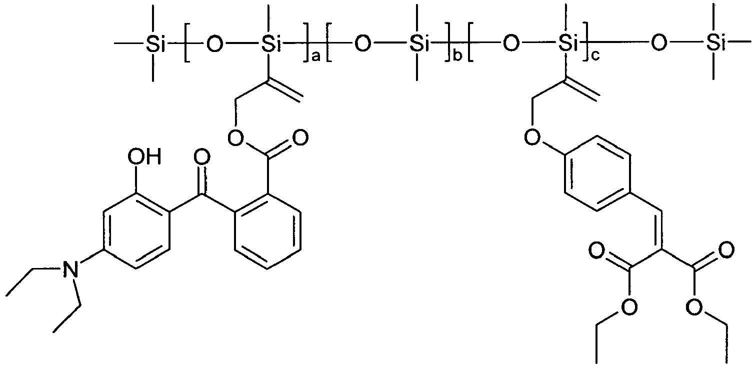

Die in der Liste aufgeführten Verbindungen sind nur als Beispiele aufzufassen. Selbstverständlich können auch andere UV-Filter verwendet werden.

Geeignete organischen UV-schützende Substanzen sind bevorzugt aus der folgenden Liste auszuwählen: Ethylhexyl salicylate, Phenylbenzimidazolesulfonic acid, Benzophenone-3, Benzophenone-4, Benzophenone-5, n-Hexyl 2-(4-diethylamino-2-hydroxybenzoyl)benzoate, 4-Methylbenzylidenecamphor, Terephthalylidenedicamphorsulfonic acid, Disodium phenyldibenzimidazoletetrasulfonate, Methylenebis(benzotriazolyl)tetramethylbutylphenol, Ethylhexyl Triazone, Diethylhexyl Butamido Triazone, Drometrizole trisiloxane, Polysilicone-15, 1,1-Dicarboxy(2,2'-dimethylpropyl)-4,4-diphenylbutadiene, 2,4-Bis[5-1 (dimethylpropyl)benzoxazol-2-yl(4-phenyl) imino]-6-(2-ethylhexyl)imino-1,3,5-triazine und Mischungen davon.

Diese organischen UV-Filter werden in der Regel in einer Menge von 0,01 Gewichtsprozent bis 20 Gewichtsprozent, vorzugsweise 1 Gew.-% - 10 Gew.-%, in Formulierungen eingearbeitet.

Die Zubereitungen können neben den gegebenenfalls organischen UV-Filtern, wie zuvor beschrieben, weitere anorganische UV-Filter, sogenannte partikuläre UV-Filter, enthalten.

Diese Kombinationen mit partikulären UV-Filtern sind sowohl als Pulver als auch als Dispersion oder Paste der folgenden Typen möglich.

Hierbei sind sowohl solche aus der Gruppe der Titandioxide wie z.B. gecoatetes Titandioxid (z.B. Eusolex® T-2000, Eusolex®T-AQUA, Eusolex®T-AVO, Eusolex®T-OLEO), Zinkoxide (z.B. Sachtotec®), Eisenoxide oder auch Ceroxide und/oder Zirkonoxide bevorzugt.

Ferner sind auch Kombinationen mit pigmentärem Titandixoxid oder Zinkoxid möglich, wobei die Partikelgröße dieser Pigmente größer oder gleich 200 nm sind, beispielsweise Hombitan® FG oder Hombitan® FF-Pharma.

Weiter kann es bevorzugt sein, wenn die Zubereitungen anorganische UV-Filter enthalten, die mit üblichen Methoden, wie beispielsweise in Cosmetics & Toiletries, February 1990, Vol. 105, pp. 53 64 beschrieben, nachbehandelt wurden. Hierbei können eine oder mehrere der folgenden Nachbehandlungskomponenten gewählt sein: Amino Säuren, Bienenwachs, Fettsäuren, Fettsäurealkohole, anionische Tenside, Lecithin, Phospholipide, Natrium-, Kalium-, Zink-, Eisen- oder Aluminiumsalze von Fettsäuren, Polyethylene, Silikone, Proteine (besonders Collagen oder Elastin), Alkanolamine, Siliciumdioxid, Aluminiumoxid, weitere Metalloxide, Phosphate, wie Natriumhexametaphosphat oder Glycerin.

Bevorzugt eingesetzte partikuläre UV-Filter sind dabei:
- unbehandelte Titandioxide wie z.B. die Produkte Microtitanium Dioxide MT 500 B der Fa. Tayca; Titandioxd P25 der Fa. Evonik,
- Nachbehandelte mikronisierte Titandioxide mit Aluminiumoxid und Siliciumdioxid Nachbahandlung wie z.B. das Produkt "Microtitanium Dioxide MT 100 SA der Tayca; oder das Produkt "Tioveil Fin" der Fa. Uniqema,-Nachbehandelte mikronisierte Titandioxide mit Aluminiumoxid und/oder Aluminiumstearate/laurate Nachbehandlung wie z.B. Microtitanium Dioxide MT 100 T der Fa. Tayca, Eusolex T-2000 der Firma Merck,
- Nachbehandelte mikronisierte Titandioxide mit Eisenoxid und/oder Eisenstearate Nachbehandlung wie z.B. das Produkt "Microtitanium Dioxide MT 100 F" der Fa. Tayca,
- Nachbehandelte mikronisierte Titandioxide mit Siliciumdioxide, Aluminiumoxid und Silicon Nachbehandlung wie z.B. das Produkt "Microtitanium Dioxide MT 100 SAS",der Fa. Tayca,
- Nachbehandelte mikronisierte Titandioxide mit Natrumhexameta¬phosphate, wie z.B. das Produkt "Microtitanium Dioxide MT 150 W" der Fa. Tayca,
- Nachbehandelte mikronisierte Titandioxide mit Aluminiumoxid und Mangandioxid Nachbehandlung wie z.B. das Produkt "Eusolex T-PRO" der Fa. Merck,

Die zur Kombination eingesetzten behandelten mikronisierten Titandioxide können auch nachbehandelt sein mit:
- Octyltrimethoxysilane; wie z.B. das Produkt "Tego Sun T 805" der Fa. Degussa,- Siliciumdioxid; wie z.B. das Produkt Parsol "T-X" der Fa. DSM,
- Aluminiumoxid und Stearinsäure; wie z.B. das Produkt "UV-Titan M160" der Fa. Sachtleben,
- Aluminium und Glycerin; wie z.B. das Produkt "UV-Titan 212" der Fa. Sachtleben
- Aluminium und Silikonölen, wie z.B. das Produkt "UV-Titan M262" der Fa. Sachtleben,
- Natriumhexamethaphosphat und Polyvinylpyrrolidon,
- Polydimethylsiloxane, wie z.B. das Produkt "70250 Cardre UF TiO2SI3" der Fa. Cardre,
- Polydimethylhydrogensiloxane, wie z.B. das Produkt "Microtitanium Dioxide USP Grade Hydrophobic" der Fa. Color Techniques,
- Siliziumdioxid und Cetylphosphat, wie z.B. das Produkt Eusolex T-EASY der Fa. Merck.

Ferner kann auch die Kombination mit folgenden Produkten vorteilhaft sein:
- Unbehandelte Zinkoxide wie z. B. das Produkt Z-Cote der Fa. BASF (Sunsmart), Nanox der Fa. Elementis
- Nachbehandelte Zinkoxide wie z.B die folgenden Produkte:
   - "Zinc Oxide CS-5" der Fa. Toshibi (ZnO nachbehandelt mit polymethylhydrogenosiloxane)
   - Nanogard Zinc Oxide FN der Fa. Nanophase Technologies
   - "SPD-Z1" der Fa Shin-Etsu (ZnO nachbehandelt mit einem Silikongepfropften Acrylpolymer, dispergiert in Cyclodimethylsiloxane
   - "Escalol Z100" der Fa ISP (Aluminiumoxid nachbehandeltes ZnO dispergiert in einer ethylhexyl methoxycinnamate/PVP-hexadecene/ methicone copolymer Mischung)
   - "Fuji ZNO-SMS-10" der Fa. Fuji Pigment (ZnO nachbehandelt mit Siliciumdioxid und Polymethylsilesquioxan);
   - Unbehandeltes Ceroxide Mikropigment z.B. mit der Bezeichnung "Colloidal Cerium Oxide" der Fa Rhone Poulenc
   - Unbehandelte und/oder nachbehandelte Eisenoxide mit der Bezeichnung Nanogar der Fa. Arnaud.

Beispielhaft können auch Mischungen verschiedener Metalloxide , wie z.B. Titandioxid und Ceroxid mit und ohne Nachbenhandlung eingesetzt werden, wie z.B. das Produkt Sunveil A der Fa. Ikeda. Außerdem können auch Mischungen von Aluminiumoxid, Siliciumdioxid und Silikonnachbehandeltem Titandioxid, Zinkoxid-Mischungen wie z.B . das Produkt UV-Titan M261 der Fa. Sachtleben verwendet werden.

Diese anorganischen UV-Filter werden in der Regel in einer Menge von 0,1 Gewichtsprozent bis 25 Gewichtsprozent, vorzugsweise 2 Gew.-% - 10 Gew.-%, in die Zubereitungen eingearbeitet.

Durch Kombination von einer oder mehrerer der genannten Verbindungen mit UV-Filterwirkung kann die Schutzwirkung gegen schädliche Einwirkungen der UV-Strahlung optimiert werden.

Alle genannten UV-Filter können auch in verkapselter Form eingesetzt werden. Insbesondere ist es von Vorteil organische UV-Filter in verkapselter Form einzusetzen.

Dabei sind die Kapseln in erfindungsgemäß einzusetzenden Zubereitungen vorzugsweise in solchen Mengen enthalten, die gewährleisten, dass die verkapselten UV-Filter in den oben angegebenen Gewichtsprozentverhältnissen in der Zubereitung vorliegen.

Dem Fachmann bereitet es dabie keinerlei Schwierigkeiten, die geeigneten zusätzlichen Inhaltsstoffen für den jeweiligen Verwendungszweck des erfindungsgemäßen Puders auszuwählen, sowie die geeignete Menge zu ermitteln.

Bei der erfindungsgemäßen Puderformulierung kann es sich sowohl um ein gepresstes als auch um ein loses Puderprodukt handeln. Auch kann die Formulierung als Puder-Aerosol vorliegen.

Gegenstand der vorliegenden Erfindung ist auch ein Verfahren zur Herstellung einer Puderformulierung wie zuvor beschrieben, dadurch gekennzeichnet, dass das mindestens eine Insektenabwehrmittel mit dem Magnesiumhydroxidcarbonat und den gegebenenfalls weiteren Inhaltsstoffen, wie zuvor beschrieben, vermischt wird.

Die genannten Bestandteile der Zubereitung können in der üblichen Weise eingearbeitet werden, mit Hilfe von Techniken, die dem Fachmann wohl bekannt sind.
Typischerweise werden zunächst die einzelnen Puderkomponenten mit geeigneten Mischwerkzeugen bzw. Pulvermischmaschinen miteinander verrührt, bis eine homogene Mischung entsteht. Hierfür eignet sich beispielsweise ein Rührwerk mit einem Propellerrührer oder eine Mühle, beispielsweise eine Messermühle, Rotormühle, Kugelmühle oder Mörsermühle oder Gegenstrommischanlagen oder Drehstrahlmischer. Anschließend wird das Insektenabwehrmittel hinzugegeben und weiter gerührt, bis es homogen in der Mischung verteilt ist.

Ein weiterer Gegenstand der vorliegenden Erfindung ist auch die Verwendung einer Puderformulierung wie zuvor beschrieben zur Abwehr von Insekten.

Zur Anwendung werden die erfindungsgemäßen Puderformulierungen in der für topische Produkte üblichen Weise auf die Haut oder das Haar in ausreichender Menge aufgebracht.

### Abbildungen:

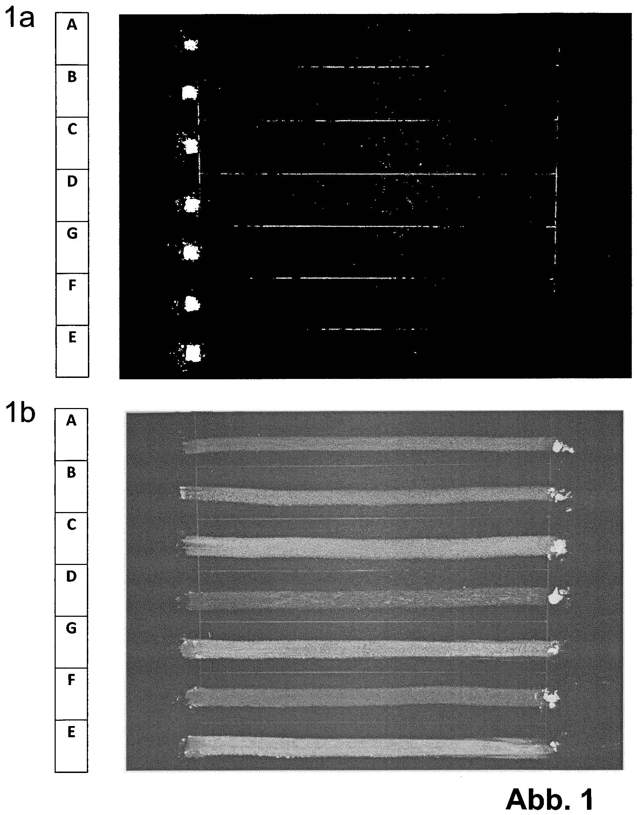

Abbildung 1a zeigt den ersten Schritt des Tests zur Puderverteilung gemäß Beispiel 2: Die zu testenden Puderformulierungen werden in kleinen Häufchen auf ein Kartonpapier auf einer Präzisionswaage aufgebracht.
Abbildung 1b zeigt den zweiten Schritt des Tests zur Puderverteilung gemäß Beispiel 2: Die Häufchen wurden mit dem Finger unter gleichmäßigem Druck über eine Strecke von 20 cm verteilt.

Die folgenden Beispiele sollen die vorliegende Erfindung veranschaulichen:

### Beispiele:

### Beispiel 1: Herstellung des Puders

Die einzelnen Komponenten des Puders (siehe Tabelle 2, Tabelle 3 und Tabelle 4) werden mithilfe einer Messermühle GM 200 der Firma Retsch zweimal bei 8000 Upm für 15 Sek. gemischt. Zwischen jedem Mischen wird der Behälter mit dem Puder auf ein Papier entleert und wieder in den Mischbehälter gegeben. Das Insektenabwehrmittel wird tropfenweise in den Mischbehälter hinzugegeben; es wird weiter dreimal bei 8000 Upm für jeweils 15 Sek. gemischt.

**Tabelle 1: Materialien und Bezugsquellen:**

| **Name** | **INCI** | **Artikelnummer** | **Bezugsquelle** |
|---|---|---|---|
| IR3535® (3-(N-Butylacetamino)-propionsäureethylester) | ETHYLBUTYLACETOYLA MINOPROPIONATE | 111887 | Merck KGaA |
| Parteck® LUB Talc | TALC | 108070 | Merck KGaA |
| Maisita Natural | ZEA MAYS (CORN) STARCH | 9083 | Agrana |
| Covabead PMMA | POLYMETHYL METHACRYLAT | | Sensient |
| Magnesiumhydroxydca rbonate Schwer (Schüttdichte >400 g/l) | MAGNESIUM CARBONATE | 105829 | Merck Millipore |
| PharMagnesia MC Type E (Schüttdichte ca. 120 g/l) | MAGNESIUM CARBONATE | 24202010-00 | Lehmann& Voss&Co |
| Reisita Natural | OROZA SATIVA STARCH | 9094 | Agrana Stärke GmbH |
| Parteck® LUB MST | MAGNESIUMSTEARATE | 100663 | Merck KGaA |
| Polyethylene Glycol 400 | PEG-8 | 817003 | Merck KGaA |
| Arlamol PS15E | PPG-15 STEARYL ETHER | | Croda GmbH |
| Ethanol 96% | ALCOHOL | 100971 | Merck KGaA |
| Polyethylene Glycol 1500 | PEG-32 | 817005 | Merck KGaA |
| Tween 20 | POLYSORBATE 20 | 817072 | Merck KGaA |
| RonaFlair® Mica M | MICA | 104750 | Merck KGaA |
| Magnesia® 12 | MAGNESIUM CARBONATE | 1120000 | Magnesia GmbH |
| PonaFlair® Soft Sphere | SYNTHETIC FLURPHOLOPITE | 117756 | Merck KGaA |
| PonaFlair® ESQ | BISMUTH OXYCHLORIDE | 117061 | Merck KGaA |
| PonaFlair® Boroneige® SF-15 | BORON NITRIDE | 117778 | Merck KGaA |
| RonaFlair® White Sapphire | SYNTHETIC SAPPHIRE | 117751 | Merck KGaA |
| Orgasol® 2002 D NAT COS | NYLON-12 | | Arkema |

### Beispiel 2: Evaluierung der Puderverteilung

### Verwendete Materialien:

- Präzisionswaage MSE4202S-0CE-D0 von Sartorius AG
- Analysenwaage MSA324S-0CE-DU von Sartorius AG
- Fotokarton 300 g/qm von Ludwig Bähr GmbH &Co.KG (Art. Nr.: 3774690)

### Durchführung:

Das Kartonpapier wird auf der Präzisionswaage mit doppelseitigem Klebeband fixiert. 30,0 ± 3 mg Puder werden in Form eines kleinen Häufchens auf das Papier aufgebracht. Die exakt verwendete Menge wird notiert (Abbildung 1a).
Man presst den Zeigefinger mit 200 bis 250 g Gewicht auf das Puderhäufchen (das Gewicht wird auf der Präzisionswaage kontrolliert) und fährt gleichmäßig über eine Strecke von 20 cm. Das Ergebnis ist in Abbildung 1b gezeigt. Die Menge an Material, die nicht auf der 20 cm Strecke zurückbleibt, wird quantitativ in ein Wägeschiffchen überführt und gewogen. Die Menge wird notiert.
Das Verfahren wird für jede Probe mindestens dreimal wiederholt.
Der Quotient aus dem auf den 20 cm verbleibendem Material zu dem ursprünglich eingesetztem Material beschreibt das Verteilungsvermögen des Puders und wird in % (Abrieb) ausgedrückt (siehe Tabelle 2 und Tabelle 3). Je höher der Abrieb, desto besser ist die Verteilung der Formulierung auf der Haut. Formulierungen mit geringem Abrieb lassen sich auf der Haut nicht verteilen, da die Partikel dieser Formulierungen zusammen kleben.

Getestet werden die Formulierungen A bis G. Formulierungen A, B und C stellen klassische Puderformulierungen als Vergleichsformulierungen dar (Tabelle 2). Erfindungsgemäße Formulierungen sind die Formulierungen D, E, F und G (Tabelle 3).

**Tabelle 2: Vergleichsformulierungen**

| **Material** | | **A** | **B** | **C** |
|---|---|---|---|---|
| | | | | |
| IR 3535 | ETHYLBUTYLACETOYLAMINOPROPIONATE | 20% | 20% | 20% |
| | | | | |
| Parteck® LUB Talc | TALC | 80% | | |
| Maisita Natural | ZEA MAYS (CORN) STARCH | | 80% | |
| Covabead PMMA | POLYMETHYL METHACRYLAT | | | 80% |
| Summe | | 100.0 % | 100.0 % | 100.0 % |
| **Pay-off in %** | | **23.5%** | **52.7%** | **45.8%** |

Formulierung A repräsentiert eine gängige Formulierung bestehend hauptsächlich aus Talkum. Diese weist einen geringen Abrieb auf und lässt sich auf der Haut nicht verteilen. Gängige Substanzen die eingesetzt werden um Formulierungen pudriger zu machen damit diese sich auf der Haut besser verteilen lassen, sind z.B. Stärke oder PMMA. Formulierungen B bzw. C zeigen einen etwas höheren Abrieb, jedoch zu gering um sich gut auf der Haut verteilen zu lassen.

**Tabelle 3:**

| **Material** | | **D** | **E** | **F** | **G** |
|---|---|---|---|---|---|
| Parteck® LUB Talc | TALC | 30.00 | 30.00 | 48.00 | 47.00 |
| Magnesiumhydro xidcarbonate Schwer (Schüttdichte >400 g/l) | MAGNESIUM CARBONATE | 28.00 | | | |
| PharMagnesia MC Type E (Schüttdichte ca. 120 g/l) | MAGNESIUM CARBONATE | | 28.00 | 10.00 | 25.00 |
| Reisita Natural | OROZA SATIVA STARCH | 19.00 | 19.00 | 19.00 | 5.00 |
| Parteck® LUB MST | MAGNESIUMSTEARAT E | 3.00 | 3.00 | 3.00 | 3.00 |
| IR 3535 | ETHYLBUTYLACETOY LAMINOPROPIONATE | 20.00 | 20.00 | 20.00 | 20.00 |
| Summe | | 100.00 | 100.00 | 100.00 | 100.0 0 |
| **Abrieb in %** | | **37.2%** | **87.7%** | **35.6%** | **68.8%** |

Bei den Formulierungen D und F handelt es sich um nicht erfindungsgemässe Vergleichsformulierungen. Überraschend zeigt der Einsatz von Magnesiumhydroxidcarbonat in den Formulierungen eine deutliche Steigerung des Abriebs.

### Beispiel 3: In vivo Wirksamkeitsstudie zur Bestimmung der Wirksamkeit der Puder gegen Stechmücken

### Durchführung:

### i. Eignungstest

a) Stechmücken: *Aedes albopictus,* nicht mit Blut gefütterte Weibchen, 3 - 5 Tage nach dem Schlüpfen.
b) Raumtemperatur: 25 °C - 26 °C
c) Luftfeuchtigkeit: 60 % - 65 %
d) Analysenwaage: BP110S von Sartorius AG
e) Stoppuhr: SJ9-2 von Jinque

Mindestens 300 Stechmücken befinden sich in einem Käfig mit den Maßen: Länge = 400 mm, Breite = 300 mm und Höhe = 300 mm. Testpersonen mit einem Testhandschuh, der 16 cm² (4 cm x 4 cm) der Haut des Handrückens ungeschützt lässt, legen ihre Hand für 2 min in den Käfig.

Wenn mehr als 30 Stechmücken auf der exponierten Haut landen, gelten die Testperson und die Mücken als für den Test geeignet. 4 geeignete Testpersonen (2 männliche und 2 weibliche) werden für den Test ausgewählt.

### ii. Dosis des Puders: 1,5 mg/cm²

Eine Gesamtmenge von 37,5 mg des Puders wird auf eine Fläche von 25 cm² (5 cm x 5 cm) aufgetragen.

### iii. Durchführung des Tests:

Das Testpuder wird jeweils gleichmäßig auf den Handrücken (5 cm x 5 cm) einer Hand jeder Testperson in einer Dosis von 1,5 mg/cm² aufgetragen.

Die andere Hand dient als Vergleich. Zwei Stunden nach dem Auftragen der Puder halten die Testpersonen die Arme in den Käfig. Dabei tragen sie den Testhandschuh, wobei dieser die Stelle ausspart, an der das Puder aufgetragen wurde.

Zwei Minuten lang wird beobachtet, ob die Stechmücken auf den offenen Stellen landen und das Blut saugen.

Diese Vorgehensweise wird jede Stunde wiederholt bis eine Stechmücke während der zwei Minuten Beobachtungszeit auf der Haut landet und Blut saugt. Der Ausdruck "*in vivo* Wirksamkeit" gibt an, wie lange für die jeweiligen Formulierungen Schutz vor den Mücken besteht, d.h. wie lange es dauert, bis die erste Mücke auf der Haut landet und Blut saugt. Der angegebene Wert bestimmt sich aus dem Mittelwert aus der Schutzzeitbestimmung der vier Probanden.

### iv. Getestete Proben:

Getestet werden die erfindungsgemäßen Formulierungen E, G, H, I und J (siehe Tabelle 4; die Herstellung erfolgt gemäß Beispiel 1).

Als Positivkontrolle dient ein Insektenabwehrspray der folgenden Rezeptur:

| **Inhaltsstoffe** | **INCI** | **[%]** |
|---|---|---|
| A | | |
| IR3535® | ETHYL BUTYLACETYLAMINOPROPIONATE | 20,00 |
| Polyethylene Glycol 400 | PEG-8 | 5,00 |
| Arlamol PS15E | PPG-15 STEARYL ETHER | 3,00 |
| | | |

| B | | |
|---|---|---|
| Ethanol 96% | ALCOHOL | 35,00 |
| Polyethylene Glycol 1500 | PEG-32 | 4,00 |
| Tween 20 | POLYSORBATE 20 | 1,50 |
| Water | AQUA | 31,50 |

Phase A und B werden separat gemischt. Phase B wird langsam zu Phase A gegeben und die Mischung wird gerührt bis eine homogene und klare Mischung entsteht (pH (21°C)=6,70).

### Ergebnis:

Das Ergebnis des Tests ist in Tabelle 4 dargestellt. Für die Positivkontrolle wird eine *in vivo* Wirksamkeit von 4,5 Stunden erhalten.

**Tabelle 4:**

| **Material** | | **E** | **G** | **H** | **I** | **J** |
|---|---|---|---|---|---|---|
| Parteck® LUB Talc | TALC | 30.00 | 47.00 | 42.00 | 57.00 | 72.00 |
| PharMagnesia MC Type E | MAGNESIUM CARBONATE | 28.00 | 25.00 | 25.00 | 20.00 | 10.00 |
| Reisita Natural | OROZA SATIVA STARCH | 19.00 | 5.00 | | 5.00 | 5.00 |
| Parteck® LUB MST | MAGNESIUMSTEARATE | 3.00 | 3.00 | 3.00 | 3.00 | 3.00 |
| RonaFlair® Mica M | MICA | | | 10.00 | | |
| IR 3535 | ETHYLBUTYLACETO YLAMINOPROPIONATE | 20.00 | 20.00 | 20.00 | 15.00 | 10.00 |
| Summe | | 100.00 | 100.00 | 100.00 | 100.00 | 100.00 |
| | | | | | | |
| ***In vivo* Wirksamkeit** | | **2.3h** | **3.8h** | **2.8h** | **3.5h** | **2.5h** |

Formulierung G zeigt, dass eine geringere Konzentration von Magnesiumhydroxidcarbonat und Stärke die Wirksamkeit verlängern kann. Formulierungen I und J zeigen die Abhängigkeit der Konzentration von IR 3535 und der Wirksamkeitsdauer.

### Beispiel 4: Formulierungsbeispiele

**Tabelle 5:**

| **Material** | | **1** | **2** | **3** | **4** | **5** | **6** | **7** |
|---|---|---|---|---|---|---|---|---|
| Parteck® LUB Talc | TALC | 70.00 | 60.00 | 85.00 | 65.00 | 65.00 | 50.00 | 55.00 |
| PharMagnesia MC Type E | MAGNESIUM CARBONATE | 20.00 | 10.00 | | | | 20.00 | |
| Magnesia® 12 | MAGNESIUM CARBONATE | | | 5.00 | 10.00 | 15.00 | | 15.00 |
| RonaFlair® Soft Sphere | SYNTHETIC FLURPHOLOPITE | | 10.00 | | | | | |
| RonaFlair® ESQ | BISMUTH OXYCHLORIDE | | | | | 5.00 | | |
| RonaFlair® Boroneige® SF-15 | BORON NITRIDE | | | | | | 10.0 0 | |
| RonaFlair® White Sapphire | SYNTHETIC SAPPHIRE | | | | | | | 10.00 |
| Orgasol® 2002 D NAT COS | NYLON-12 | | | | 5.00 | | | |
| IR 3535 | ETHYLBUTYLACE TOYLAMINOPROPIONATE | 10.00 | 20.00 | 10.00 | 20.00 | 15.00 | 20.00 | 20.00 |
| Summe | | 100.00 | 100.00 | 100.00 | 100.00 | 100.00 | 100.00 | 100.00 |

## Patentansprüche

1. Puderformulierung enthaltend (a) mindestens ein Insektenabwehrmittel ausgewählt aus N,N-Diethyl-m-toluamid, 3-(N-Butylacetamino)-propionsäureethylester, 1-(1-Methylpropoxycarbonyl)-2-(2-hydroxyethyl)piperidin, Citronellaöl und Andirobaöl und (b) Magnesiumhydroxidcarbonat, wobei das Magnesiumhydroxidcarbonat eine Schüttdichte von maximal ca. 200 g/l aufweist, das Gewichtsverhältnis von Magnesiumhydroxidcarbonat zu Insektenabwehrmittel in der Formulierung 2:1 bis 1:1 beträgt und die Formulierung 5 bis 20 Gewichts-%, bezogen auf das Gesamtgewicht der Formulierung, des mindestens einen Insektenabwehrmittels enthält.

2. Puderformulierung gemäß Anspruch 1, **dadurch gekennzeichnet, dass** das mindestens eine Insektenabwehrmittel 3-(N-Butylacetamino)-propionsäureethylester ist.

3. Puderformulierung gemäß Anspruch 1 oder 2, **dadurch gekennzeichnet, dass** die Formulierung 10 bis 20 Gewichts-%, bezogen auf das Gesamtgewicht der Formulierung, des mindestens einen Insektenabwehrmittels enthält.

4. Puderformulierung gemäß einem oder mehreren der Ansprüche 1 bis 3, **dadurch gekennzeichnet, dass** die Formulierung 5 bis 40 Gewichts-%, bezogen auf das Gesamtgewicht der Formulierung, Magnesiumhydroxidcarbonat enthält.

5. Puderformulierung gemäß Anspruch 4, **dadurch gekennzeichnet, dass** die Formulierung 5 bis 30 Gewichts-%, bezogen auf das Gesamtgewicht der Formulierung, Magnesiumhydroxidcarbonat enthält.

6. Puderformulierung gemäß einem oder mehreren der Ansprüche 1 bis 5, **dadurch gekennzeichnet, dass** das Gewichtsverhältnis von Magnesiumhydroxidcarbonat zu Insektenabwehrmittel in der Formulierung 1,5:1 bis 1:1 beträgt.

7. Puderformulierung gemäß einem oder mehreren der Ansprüche 1 bis 6, **dadurch gekennzeichnet, dass** die Formulierung weiterhin ein oder mehrere Inhaltsstoffe ausgewählt aus Getreidestärke, Reisstärke, Maisstärke, modifizierte Stärke, Glimmer, synthetischer Glimmer, Bornitrid, Titandioxid, Talkum, Aluminiumoxid, Wismuthoxichlorid, PMMA, Nylon und Silica enthält.

8. Verfahren zur Herstellung einer Puderformulierung gemäß einem oder mehreren der Ansprüche 1 bis 7, **dadurch gekennzeichnet, dass** das mindestens eine Insektenabwehrmittel mit dem Magnesiumhydroxidcarbonat und gegebenenfalls weitern Inhaltsstoffen vermischt wird.

9. Nicht-therapeutische Verwendung einer Puderformulierung gemäß einem oder mehreren der Ansprüche 1 bis 7 zur Abwehr von Insekten.

## Claims

1. Powder formulation comprising (a) at least one insect repellent selected from N,N-diethyl-m-toluamide, ethyl 3-(N-butylacetamino)propionate, 1-(1-methylpropoxycarbonyl)-2-(2-hydroxyethyl)piperidine, citronella oil and andiroba oil and (b) magnesium hydroxide carbonate, where the magnesium hydroxide carbonate has a bulk density of at most about 200 g/l, the weight ratio of magnesium hydroxide carbonate to insect repellent in the formulation is 2:1 to 1:2 and the formulation comprises 5 to 20% by weight, based on the total weight of the formulation, of the at least one insect repellent.

2. Powder formulation according to Claim 1, **characterised in that** the at least one insect repellent is ethyl 3-(N-butylacetamino)propionate.

3. Powder formulation according to Claim 1 or 2, **characterised in that** the formulation comprises 10 to 20% by weight, based on the total weight of the formulation, of the at least one insect repellent.

4. Powder formulation according to one or more of Claims 1 to 3, **characterised in that** the formulation comprises 5 to 40% by weight, based on the total weight of the formulation, of magnesium hydroxide carbonate.

5. Powder formulation according to Claim 4, **characterised in that** the formulation comprises 5 to 30% by weight, based on the total weight of the formulation, of magnesium hydroxide carbonate.

6. Powder formulation according to one or more of Claims 1 to 5, **characterised in that** the weight ratio of magnesium hydroxide carbonate to insect repellent in the formulation is 1.5:1 to 1:1.

7. Powder formulation according to one or more of Claims 1 to 6, **characterised in that** the formulation furthermore comprises one or more ingredients selected from cereal starch, rice starch, maize starch, modified starch, mica, synthetic mica, boron nitride, titanium dioxide, talc, aluminium oxide, bismuth oxychloride, PMMA, nylon and silica.

8. Process for the preparation of a powder formulation according to one or more of Claims 1 to 7, **characterised in that** the at least one insect repellent is mixed with the magnesium hydroxide carbonate and optionally further ingredients.

9. Non-therapeutic use of a powder formulation according to one or more of Claims 1 to 7 for repelling insects.

## Revendications

1. Formulation de poudre comprenant (a) au moins un insectifuge choisi parmi le N,N-diéthyl-m-toluamide, le 3-(N-butylacétamino)propionate d'éthyle, la 1-(1-méthylpropoxycarbonyl)-2-(2-hydroxyéthyl)pipéridine l'essence de citronnelle et l'huile d'andiroba et (b) du carbonate d'hydroxyde de magnésium, où le carbonate d'hydroxyde de magnésium possède une densité apparente d'au plus environ 200 g/l, le rapport pondéral du carbonate d'hydroxyde de magnésium à l'insectifuge dans la formulation va de 2:1 à 1:2 et la formulation comprend de 5 à 20% en poids, sur la base du poids total de la formulation, du au moins un insectifuge.

2. Formulation de poudre selon la revendication 1, **caractérisée en ce que** le au moins un insectifuge est le 3-(N-butylacétamino)propionate d'éthyle.

3. Formulation de poudre selon la revendication 1 ou 2, **caractérisée en ce que** la formulation comprend de 10 à 20% en poids, sur la base du poids total de la formulation, du au moins un insectifuge.

4. Formulation de poudre selon l'une ou plusieurs parmi les revendications 1 à 3, **caractérisée en ce que** la formulation comprend de 5 à 40% en poids, sur la base du poids total de la formulation, de carbonate d'hydroxyde de magnésium.

5. Formulation de poudre selon la revendication 4, **caractérisée en ce que** la formulation comprend de 5 à 30% en poids, sur la base du poids total de la formulation, de carbonate d'hydroxyde de magnésium.

6. Formulation de poudre selon l'une ou plusieurs parmi les revendications 1 à 5, **caractérisée en ce que** le rapport pondéral du carbonate d'hydroxyde de magnésium à l'insectifuge dans la formulation va de 1.5:1 à 1:1.

7. Formulation de poudre selon l'une ou plusieurs parmi les revendications 1 à 6, **caractérisée en ce que** la formulation comprend en outre un ou plusieurs ingrédients choisis parmi l'amidon de céréale, l'amidon de riz, l'amidon de maïs, un amidon modifié, le mica, un mica synthétique, le nitrure de bore, le dioxyde de titane, le talc, l'oxyde d'aluminium, l'oxychlorure de bismuth, le PMMA, le nylon et la silice.

8. Procédé de préparation d'une formulation de poudre selon l'une ou plusieurs parmi les revendications 1 à 7, **caractérisé en ce que** le au moins un insectifuge est mélangé avec le carbonate d'hydroxyde de magnésium et éventuellement d'autres ingrédients.

9. Utilisation non thérapeutique d'une formulation de poudre selon l'une ou plusieurs parmi les revendications 1 à 7, pour éloigner des insectes.
